# EUROPEAN PATENT APPLICATION

(11) **EP 1 575 198 A2**
(43) Date of publication of application: **14.09.2005**
(21) Application number: 03794207.5
(22) Date of filing: 03.09.2003
(51) Int. Cl.: H04B 13/00

(54) **CONTEMPLATION WAVE COMMUNICATION DEVICE**

(30) Priority: 04.09.2002 JP 2002259343
(71) Applicant: Middle Way GSH Co. Ltd., Tokyo 107-0052 (JP)
(72) Inventor: MIYA, Kenichi, (JP); HATANAKA, Takuji, Yukuhashi-shi, Fukuoka 824-0001 (JP)
(74) Representative: Hengelhaupt, Jürgen
(86) International application number: PCT/JP2003/011260
(87) International publication number: WO 2004/023683

(57) **Abstract**

Provision of a new communication device that uses pneumatronic waves as transmission medium, taking advantage of the characteristics of responsive materials such as ceramics. The space communication device contains a transmission means that generates pneumatronic waves vibration-modulated by letting electromagnetic waves carrying information signals act on wave-transferred inorganic materials, a receiving means that detects as information signals electromagnetic waves generated by the coming pneumatronic waves, which act on the said wave-transferred inorganic materials to vibration-demodulate such materials, and a differential transformation means that prevents the said electromagnetic waves from impeding receiving action.

## Description

### BACKGROUND OF THE PRESENT INVENTION

### Field of the invention

The present invention relates to a new type device for pneumatronic wave-communications capitalizing on the characteristics of pneumatronic waves with extremely high frequency such as high speed in transmission of actions and high penetrativeness into materials.

### Description of the related art

The conventional communication has been conducted by means of what is called microwave-related technology with the light domain as the upper limit. Lately, new demands are emerging concerning communications, as human beings expand their activities to space beyond the sphere of the Earth.

Increasing the volume of communication beyond the restriction of the existing microwave communication domain (communication band), shortening information transfer time, and realizing communication with any places, whether underground or under water, are among those new demands.

However, the traditional technology cannot possibly meet those demands; therefore, need for a new idea is surfacing.

### SUMMARY OF THE INVENTION

Recent research of elementary particles indicates that there exist new elementary particles intermediating human mental power or will power in addition to the conventional elementary particles. Such power is named "pneumatron", which is corresponding to what is called the "fifth power" that is different from the four (4) powers known in the traditional physics, namely, gravitation, electromagnetic power, and what are called weak power and strong power. The pneumatron is free from electricity, and penetrates materials as its property. The wave corresponding to the pneumatron is called pneumatronic wave, with extremely high frequency and is thought to have higher transfer speed than the velocity of light.

Existence of such pneumatronic wave has been testified this way: Take a photograph of the point the pneumatronic wave reached, detect the photograph thus taken with an O ring, and ascertain and determine the arrival of the pneumatronic wave at the point by checking the results of the detection.

On the other hand, ceramics are well known as materials responsive to the aforementioned "fifth power", or in other words, easy to generate pneumatronic waves. Ferrite core can also be a responsive material.

The present invention is designed to provide a new communication device that, taking advantage of the characteristics of such responsive materials, uses the aforesaid pneumatronic waves as transmission media.

### BRIEF DESCRIPTION OF THE DRAWINGS

Fig. 1 is the connection diagram of an embodiment of the transmitter-receiver according to the present invention.
Fig. 2 shows an embodiment of the construction of the antenna part according to the present invention.

### Expression of reference letters

A₁ and A₂: antenna parts
f₁, f₂: carrier waves and their frequencies
L₁, L₂: differential coil windings for transmission
L₃: coil winding for reception
S₁, S₂: communication offices
B: ferrite core
C: ceramics
D: metal container
d: distance between communication offices
E: coaxial cable
F: Pneumatronic wave and its frequency

### DESCRIPTION OF THE INVENTION AND PREFERRED EMBODIMENTS

Embodiments of the present invention are described based on drawings as follows:

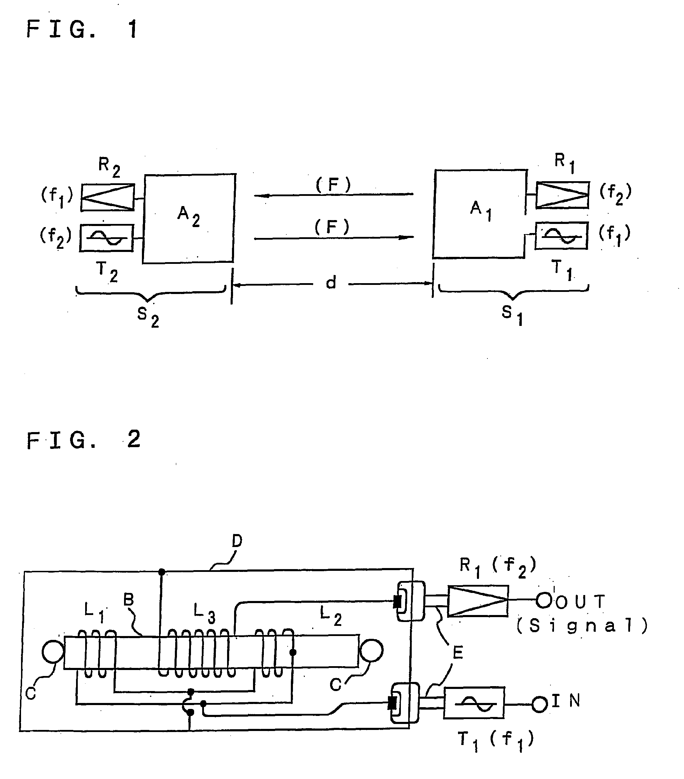

Device for pneumatronic wave-communications according to the present invention are placed on points having the distance d from each other, and space communication is conducted between a communication office S₁ and a communication office S₂ provided with a transmission means and a reception means respectively. Fig. 1 is the connection diagram of the said embodiment of the transmitter-receivers.

A₁ and A₂ are antenna parts, T₁ and T₂ are transmitters, and R₁ and R₂ are receivers. The numbers accompanying the above reference letters are identified with the numbers of the communication offices S₁ or S₂ in which the respective devices are installed. F expresses the pneumatronic wave having the frequency of F, and f₁ and f₂ express the respective electromagnetic waves for transmission or their frequencies in the communication offices S₁ and S₂ The values of the f₁ and f₂ can be selected both at discretion.

The antenna parts A₁ and A₂ are of identical construction, and are both contained inside a metal container D. The metal container D may be copper and may take any forms including a cylinder or a box.

Fig. 2 explains a differential transformation means, referring to the construction of the antenna A1 as an example, wherein B expresses a ferrite core that is wound with transmitting windings L₁ and L₂, and a receiving winding L₃ connected respectively to the transmitter T₁ and the receiver R₁ through a coaxial cable core E.

As shown in Fig. 2, the transmitting windings L₁ and L₂ are wound differentially each other so that the receiving winding L₃, namely, the receiver R₁ input might not develop electromotive force that would impede receiving action. Under the present invention this function is called a differential transformation function and the means to realize such function is called a differential transformation means.

Differential winding is intended to give electromagnetic vibration action to the responsive material C even if magnetic fluxes get to cancel each other in the middle part of the ferrite core B.

The electromagnetic vibration action is identical to electromagnetic vibration, and commonly acts on both pneumatronic waves and the electromagnetic waves.

The ferrite core B has the responsive material C glued and attached at the both sides (both ends). Fig. 2 shows an embodiment of how the responsive material C is attached.

The responsive material C has been activated so as to generate a required frequency F through wave transfer. In other words, the responsive material C is so designed to generate the pneumatronic waves F, being given a proper excitation action from outside.

The wave transfer, as mentioned herein, means to define the aforesaid responsive material C in such a condition as it has required frequency and intensity, taking advantage of electromagnetic vibration action that makes an inorganic material develop its characteristics, namely, frequency and intensity.

The required frequency and intensity, as mentioned hereinabove, means any figures selected convenient to attaining the objectives of the pneumatronic wave-communications.

The activation, as mentioned herein, means to excite the elementary particles constituting the aforesaid inorganic material into acting as a medium of force. The aforesaid electromagnetic vibration action is one of effective ways to excite the elementary particles into acting as a medium of force.

Ceramics can be used as the responsive material C. Ceramics, before being used as the responsive material C, are to be formed into granules or thin disks, and then burned.

Then, the sequence of the actions in relation to the pneumatronic wave-communications is described as follows:

Firstly, an explanation is made on the case where the communication office S₁ is on the transmitter side and the communication office S₂ is on the receiver side as follows:

In the communication office S₁, modulating waves of frequency f₁ modulated with information signals by the transmitter T₁ is applied to coil windings L₁ and L₂.

The information signals, as referred heretoabove, mean signals reproduced as electrical signals carrying information hoped for transmission, as exemplified by signals reproduced as electrical signals converted from the vibration by sound wave in case of transmission of voice.

The vibration occurring on the ferrite core B in association with the electromagnetic field generated by the modulating wave f₁ is transferred to the activated ceramics C.

This vibration helps generating vertical waves(pneumatronic waves), and the said ceramics generate waves with frequency F, being modulated, namely, vibration-modulated by the modulation wave f₁.

The frequency F of such waves can be detected with an O ring machine (hereinafter sometimes referred to as "O ring" only) by taking a photograph of the point the waves reached and conducting a test on the photograph with the O ring machine. The O ring test machine included in the Tokkai Gazette number 2001-30997, for example, can be used for the aforesaid purpose. The way of detection is more specifically described this way: Indicate the reached point on the photograph with an indicating means such as a finger or an indicating rod, form an O ring with the arm having the said finger serving as an indicating means and the other arm, sense the state of gap or contact of the said O ring, using the said O ring test machine, and ascertain that the pneumatronic waves exist by confirming that the O ring does not expand or open. In addition, the frequency of the said waves can be measured this way: Indicate the portion of the point selected for measurement on the photograph and a expected frequency with the indicating means, and if the corresponding O ring does not expand or open, it can be judged that the frequency of the pneumatronic waves at the said point is identical to the expected one.

These pneumatronic waves penetrate the metal container D containing the antenna part A₁ and reach in a instance the communication office located in the distance of d. The distance of d, as mentioned herein, covers, for the moment, the range from short distances within which voices can reach to astronomical distances within the solar system, and the "instance" means a lagging time as long as the hour-length that propagates quicker than the velocity of light.

The frequency F of these waves is as extremely high as 10¹⁸ to 10⁵⁰ per second.

The said frequency F can be identified as nearly the same, when detected and measured with the said O ring inside the metal container D and outside the metal container D, and this fact shows that the waves penetrate the metal container D. Such free penetration of the metal container D proves that the pneumatronic waves have high penetration.

On the other hand, for the antenna part A₂ in the communication office S₂, the modulating waves for transmission having the frequency f₂ are applied to the coil windings L₁ and L₂ of the ferrite core, respectively. The vibration entailed with this electromagnetic action reaches the ceramics C, placing them under excitation. The pneumatronic waves F penetrate the metal container D for the antenna A₂, and act on the ceramics C which are under excitation.

As the result, the ferrite core B vibrates in conformity with the modulating waves f₁ that vibration-modulate the pneumatronic waves F that have arrived. This vibrating partial is detected by the coil winding L₃, selected for frequency by the receiver R₂, amplified, and taken out as signals sent from the communication office S₁. This action may be called vibration-demodulation.

In this case the electromotive force due to the modulating wave f₂ is cancelled at the input terminal of the receiver R₂, as is the case for the communication office S₁, so that the receiving function of the communication office S₂ might not be impeded.

Secondly, the case where, on the contrary, the communication office S₂ is on the transmitter side and the communication office S₁ is on the receiver side is described this way: First of all, the modulating waves f₂ are modulated by information signals dispatched from the communication office S₂. The electromagnetic vibration generated by said modulated modulating waves f₂ vibration-modulate to the ceramics C, causing the pneumatronic waves F.

The pneumatronic waves F instantly reach the communication office S1 located in a distance of d, giving to the ferrite core B vibration corresponding to the modulating waves f₂. The signal partials vibration-demodulated are selected for frequency by the receiver R₁, amplified, and received as signals sent from the communication office S₂.

As described hereinabove, the space communication is characterized by the fact that it uses pneumatronic waves with high frequency as transmission medium without directly treating the pneumatic waves, though, and realizes the transmission of signals, taking advantage of vibrating action common to electromagnetic waves and pneumatronic waves.

As mentioned above, the antenna parts A₁ and A₂ are both shielded by the metal container D in order to prevent the modulating waves of frequency f₁ and f₂ from leaking out of the transmitter as electromagnetic waves that might jam ordinary electromagnetic communications .

On the side of the receiver, it plays the role of preventing the reception of the subject space communication from being jammed by a number of natural as well as man-made electromagnetic waves with frequencies f₁ and f₂ coming from outside.

The space communication according to the present invention, therefore, makes it possible to perform wireless communication over a new communication medium without affecting conventional electromagnetic communications, namely without being restricted by the traditional frequency domain for electromagnetic wave communications. It means that the volume of communication can be increased.

In addition, the pneumatronic waves have extremely high frequency, so that they can freely penetrate the metal container D. Therefore, the pneumatronic waves having high penetration make it possible to communicate at any places within the cosmos, whether underground or under the water.

Accordingly, the space communication device according to the present invention can provide the below-mentioned services that could not possibly be realized by the conventional electromagnetic wave communication:
(1) The space communication according to the present invention makes it possible to perform wireless communication over a communication medium different from the conventional electromagnetic communication media with increased volume of communication and without affecting the conventional electromagnetic communications.
(2)The space communication according to the present invention makes it possible to perform communication at any places within the cosmos, whether underground or under the water.
(3)Transfer time is so short that what is called instant real time communication can be realized. Therefore, the space communication device according to the present invention will be an essential communication means in the coming cosmic-scale communication age.

In addition, since the construction of the space communication device according to the present invention is simple, it is likely to have an effect in favor of a more economically new communication.

## Claims

1. Device for pneumatronic wave-communications that contains a transmission means that generates pneumatronic waves vibration-modulated by letting electromagnetic waves carrying information signals act on wave-transferred inorganic materials, a receiving means that detects as information signals electromagnetic waves generated by vibration-demodulating pneumatronic waves, which come and act on the said wave-transferred inorganic materials, and a differential transformation means that prevents the said electromagnetic waves from impeding receiving action.

2. Device for pneumatronic wave-communications according to claim 1 wherein the said wave-transferred inorganic materials are those responsive materials which have been defined by a required frequency and a required intensity.

3. Device for pneumatronic wave-communications according to claim 2 wherein the said responsive materials to be used are ceramics.

4. Device for pneumatronic wave-communications according to claim 1, 2, or 3 wherein the said differential transformation means comprises two (2) transmitting windings that are differentially wound each other.
